(19) Europäisches Patentamt / European Patent Office / Office européen des brevets

(11) **EP 4 365 785 A1**

(12) **EUROPEAN PATENT APPLICATION**
published in accordance with Art. 153(4) EPC

(43) Date of publication:
**08.05.2024 Bulletin 2024/19**

(21) Application number: **22900351.2**

(22) Date of filing: **24.11.2022**

(51) International Patent Classification (IPC):
***G06N 20/20*** (2019.01)

(52) Cooperative Patent Classification (CPC):
**G06N 3/098; G06N 20/20**

(86) International application number:
**PCT/CN2022/133861**

(87) International publication number:
**WO 2023/098546 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.12.2021 CN 202111463299**

(71) Applicant: **Huawei Technologies Co., Ltd.**
**Longgang**
**Shenzhen, Guangdong 518129 (CN)**

(72) Inventors:
• **LI, Yinchuan**
  **Shenzhen, Guangdong 518129 (CN)**
• **SHAO, Yunfeng**
  **Shenzhen, Guangdong 518129 (CN)**
• **WU, Jun**
  **Shenzhen, Guangdong 518129 (CN)**

(74) Representative: **Maiwald GmbH**
**Engineering**
**Elisenhof**
**Elisenstrasse 3**
**80335 München (DE)**

(54) **FEDERATED LEARNING METHOD AND RELATED DEVICE**

(57)    Embodiments of this application disclose a federated learning method and a related device, which are used in a federated learning process. The method specifically includes: A server delivers a random quantization instruction to a plurality of terminals, and the plurality of terminals perform random quantization on training update data based on the random quantization instruction and upload, to the server, training update data on which random quantization has been performed. Quantization may reduce communication traffic, and random quantization may introduce disturbance to protect user privacy. After aggregating the training update data on which random quantization has been performed, the server may eliminate an additional quantization error introduced by random quantization, so that accuracy and privacy are ensured when the communication traffic in the federated learning process is reduced.

FIG. 2

## Description

This application claims priority to Chinese Patent Application No. 202111463299.0, filed with the China National Intellectual Property Administration on December 2, 2021 and entitled "FEDERATED LEARNING METHOD AND RELATED DEVICE", which is incorporated herein by reference in its entirety.

## TECHNICAL FIELD

Embodiments of this application relate to the field of machine learning, and in particular, to a federated learning method and a related device.

## BACKGROUND

With the continuous development of artificial intelligence technologies, federated learning (federated learning), as a new artificial intelligence technology, is applied in an increasingly wide range. Federated learning is a machine learning framework proposed for an existence of "data silos". Federated learning can effectively help all participants perform joint training and establish a shared machine learning model without sharing data resources, in other words, when training data is retained locally.

However, in a federated learning process, a client needs to upload a local model, a malicious attacker may reversely deduce data distribution from the uploaded local model. This may disclose data privacy of the client. Therefore, a federated learning technology needs to be combined with a privacy protection technology, to prevent the malicious attacker from obtaining data distribution of the client. In addition, because in the federated learning process, each client and a cloud server need to frequently communicate with each other to perform model transmission, and large communication traffic causes an increase of overheads, the communication traffic further needs to be reduced during transmission. Based on foregoing problem, a differential privacy technology, a multi-party security computing technology, or a homomorphic encryption technology may be used to implement privacy protection, and a quantization technology may be further used to reduce the communication traffic.

However, although a conventional quantization method can reduce the communication traffic in the federated learning process, distribution of model data almost remains unchanged when the model data is quantized. Consequently, user privacy cannot be protected. However, the differential privacy technology brings an extra error in a noise introduction process, and the homomorphic encryption technology and the multi-party security computing technology introduce extra computing overheads. Therefore, accuracy and privacy cannot be ensured when the communication traffic in the federated learning process is reduced.

## SUMMARY

Embodiments of this application provide a federated learning method and a related device, to ensure accuracy and privacy when communication traffic in a federated learning process is reduced. Embodiments of this application further provide a corresponding server, terminal, computer-readable storage medium, computer device, and the like.

A first aspect of this application provides a federated learning method, including: A server delivers a global model to a plurality of terminals, where the global model includes a plurality of local models, and the plurality of local models are in one-to-one correspondence with the plurality of terminals; the server delivers a random quantization instruction to the plurality of terminals; the server receives encoded data sent by the plurality of terminals, and decodes the encoded data to obtain quantization model update amounts of the plurality of terminals, where the quantization model update amounts of the plurality of terminals are obtained by quantizing model update amounts of the plurality of terminals by the plurality of terminals based on the random quantization instruction, and the model update amounts of the plurality of terminals are obtained by training the plurality of local models by the plurality of terminals; and the server aggregates the quantization model update amounts of the plurality of terminals to obtain a new global model, and delivers the new global model to the plurality of terminals to perform iterative update, until the global model converges.

In this application, the server may be a cloud server, each terminal may be considered as a client, and each terminal has one corresponding local model.

In this application, the random quantization instruction is delivered by the server, and the plurality of terminals may determine different random quantization manners based on different random quantization instructions.

In this application, after training the local models of the plurality of terminals based on local data, the plurality of terminals quantize and encode the model update amounts based on the random quantization instruction delivered by the server, to reduce communication traffic. After aggregation, the server may eliminate an error caused by quantization, obtain the new global model, and repeat foregoing steps to perform iterative update, to complete federated learning.

According to the first aspect, during federated learning, the server delivers the random quantization instruction to the plurality of terminals, and the plurality of terminals perform random quantization on training update data based on the random quantization instruction and upload, to the server, training update data on which random quantization has been performed. Quantization may reduce communication traffic, and random quantization may introduce disturbance to protect user privacy. After aggregating the training update data on which random quantization has been performed, the server may eliminate an additional quantization error introduced by random quantization, so that accuracy and privacy are ensured when the communication traffic in a federated learning process is reduced.

In a possible implementation of the first aspect, the random quantization instruction includes a random step quantization instruction and/or a random quantizer instruction. The quantization model update amounts of the plurality of terminals are obtained by applying a random step quantization method and/or a random quantizer to the model update amounts of the plurality of terminals by the plurality of terminals based on the random step quantization instruction and/or the random quantizer instruction.

In this possible implementation, the random quantization instruction may be specifically the random step quantization instruction, the random quantizer instruction, or a combination of the random step quantization instruction and the random quantizer instruction, so that implementability of this solution is improved.

In a possible implementation of the first aspect, random quantization steps used in the random step quantization method are randomly and evenly distributed.

In this possible implementation, when the random quantization steps are randomly and evenly distributed, an introduced quantization error may be eliminated, thereby improving data transmission accuracy.

In a possible implementation of the first aspect, the random quantizer includes an upward quantizer and a downward quantizer, and a quantity of upward quantizers is the same as a quantity of downward quantizers.

In this possible implementation, when the quantity of upward quantizers is the same as the quantity of downward quantizers, an introduced quantization error may be eliminated, thereby improving data transmission accuracy.

In a possible implementation of the first aspect, there are a plurality of types of random quantization instructions used in iterative update.

In this possible implementation, the random quantization instruction used each time in iterative update may vary, so that implementability of this solution is improved.

A second aspect of this application provides a federated learning method, including: A terminal receives a local model and a random quantization instruction that are delivered by a server; the terminal trains the local model to obtain a model update amount; the terminal performs random quantization on the model update amount based on the random quantization instruction to obtain a quantization model update amount; the terminal encodes the quantization model update amount to obtain encoded data, and sends the encoded data to the server; and the terminal receives a new local model and a new random quantization instruction that are delivered by the server to perform iterative update, until a global model converges, where the new local model is obtained by aggregating quantization model update amounts of a plurality of terminals by the server, and the quantization model update amounts of the plurality of terminals are obtained by decoding, by the server, encoded data sent by the plurality of terminals.

In this application, the server may be a cloud server, each terminal may be considered as a client, and each terminal has one corresponding local model.

In this application, the random quantization instruction is delivered by the server, and the plurality of terminals may determine different random quantization manners based on different random quantization instructions.

In this application, after training local models of the plurality of terminals based on local data, the plurality of terminals quantize and encode model update amounts based on the random quantization instruction delivered by the server, to reduce communication traffic. After aggregation, the server may eliminate an error caused by quantization, obtain a new global model, and repeat foregoing steps to perform iterative update, to complete federated learning.

According to the second aspect, during federated learning, the plurality of terminals receive the local model and the random quantization instruction that are delivered by the server, perform random quantization on training update data based on the random quantization instruction, and upload, to the server, training update data on which random quantization has been performed. Quantization may reduce communication traffic, and random quantization may introduce disturbance to protect user privacy. After aggregating the training update data on which random quantization has been performed, the server may eliminate an additional quantization error introduced by random quantization, so that accuracy and privacy are ensured when the communication traffic in a federated learning process is reduced.

In a possible implementation of the second aspect, the random quantization instruction includes a random step quantization instruction and/or a random quantizer instruction. The quantization model update amounts of the plurality of terminals are obtained by applying a random step quantization method and/or a random quantizer to model update amounts of the plurality of terminals by the plurality of terminals based on the random step quantization instruction and/or the random quantizer instruction.

In this possible implementation,

In a possible implementation of the second aspect, random quantization steps used in the random step quantization method are randomly and evenly distributed.

In this possible implementation, when the random quantization steps are randomly and evenly distributed, an introduced quantization error may be eliminated, thereby improving data transmission accuracy.

In a possible implementation of the second aspect, the random quantizer includes an upward quantizer and a downward quantizer, and a quantity of upward quantizers is the same as a quantity of downward quantizers.

In this possible implementation, when the quantity of upward quantizers is the same as the quantity of downward quantizers, an introduced quantization error may be eliminated, thereby improving data transmission accuracy.

In a possible implementation of the second aspect, there are a plurality of types of random quantization instructions used in iterative update.

In this possible implementation, the random quantization instruction used each time in iterative update may vary, so that implementability of this solution is improved.

A third aspect of this application provides a server, configured to perform the method in any one of the first aspect or the possible implementations of the first aspect. Specifically, the server includes a module or a unit, for example, a first delivering unit, a second delivering unit, a receiving unit, and an aggregating unit, that is configured to perform the method in any one of the first aspect or the possible implementations of the first aspect.

A fourth aspect of this application provides a terminal, configured to perform the method in any one of the second aspect or the possible implementations of the second aspect. Specifically, the terminal includes a module or a unit, for example, a first receiving unit, a training unit, a quantization unit, an encoding unit, and a second receiving unit, that is configured to perform the method in any one of the second aspect or the possible implementations of the second aspect.

A fifth aspect of this application provides a computer device, including a processor, a communication interface, and a memory. The memory is configured to store program code, and the processor is configured to invoke the program code in the memory, to enable a controller to perform the method in any one of the first aspect or the possible implementations of the first aspect.

A sixth aspect of this application provides a computer device, including a processor, a communication interface, and a memory. The memory is configured to store program code, and the processor is configured to invoke the program code in the memory, to enable a controller to perform the method in any one of the second aspect or the possible implementations of the second aspect.

A seventh aspect of this application provides a computer-readable storage medium, storing instructions. When the instructions are run on a computer, the computer is enabled to perform the method in any one of the first aspect or the possible implementations of the first aspect.

An eighth aspect of this application provides a computer-readable storage medium, storing instructions. When the instructions are run on a computer, the computer is enabled to perform the method in any one of the second aspect or the possible implementations of the second aspect.

A ninth aspect of this application provides a computer program product storing one or more computer-executable instructions. When the computer-executable instructions are executed by a processor, the processor performs the method in any one of the first aspect or the possible implementations of the first aspect.

A tenth aspect of this application provides a computer program product storing one or more computer-executable instructions. When the computer-executable instructions are executed by a processor, the processor performs the method in any one of the second aspect or the possible implementations of the second aspect.

An eleventh aspect of this application provides a chip system. The chip system includes at least one processor and an interface. The interface is configured to receive data and/or a signal, and the at least one processor is configured to support a computer device in implementing functions in any one of the first aspect or the possible implementations of the first aspect. In a possible design, the chip system may further include a memory. The memory is configured to store program instructions and data that are necessary for the computer device. The chip system may include a chip, or may include a chip and another discrete component.

A twelfth aspect of this application provides a chip system. The chip system includes at least one processor and an interface. The interface is configured to receive data and/or a signal, and the at least one processor is configured to support a computer device in implementing functions in any one of the second aspect or the possible implementations of the second aspect. In a possible design, the chip system may further include a memory. The memory is configured to store program instructions and data that are necessary for the computer device. The chip system may include a chip, or may include a chip and another discrete component.

In embodiments of this application, during federated learning, a server delivers a random quantization instruction to a plurality of terminals, and the plurality of terminals perform random quantization on training update data based on the random quantization instruction and upload, to the server, training update data on which random quantization has been performed. Quantization may reduce communication traffic, and random quantization may introduce disturbance to protect user privacy. After aggregating the training update data on which random quantization has been performed, the server may eliminate an additional quantization error introduced by random quantization, so that accuracy and privacy are ensured when the communication traffic in a federated learning process is reduced.

**BRIEF DESCRIPTION OF DRAWINGS**

FIG. 1 is a framework diagram of federated learning according to an embodiment of this application;

FIG. 2 is a schematic diagram of an embodiment of a federated learning method according to an embodiment of this application;

FIG. 3 is a schematic diagram of quantization of a random step quantization instruction according to an embodiment of this application;

FIG. 4 is a schematic diagram of quantization of a random quantizer instruction according to an embodiment of this application;

FIG. 5 is a schematic diagram of quantization of a random step quantization instruction in combination with a random quantizer instruction according to an embodiment of this application;

FIG. 6 is a schematic diagram of an embodiment of a server according to an embodiment of this application;

FIG. 7 is a schematic diagram of an embodiment of a terminal according to an embodiment of this application; and

FIG. 8 is a schematic diagram of an embodiment of a computer device according to an embodiment of this application.

## DESCRIPTION OF EMBODIMENTS

The following describes embodiments of this application with reference to accompanying drawings. It is clear that, the described embodiments are merely some rather than all of embodiments of this application. A person of ordinary skill in the art may learn that, with development of technologies and emergence of a new scenario, the technical solutions provided in embodiments of this application are also applicable to a similar technical problem.

In the specification, claims, and the accompanying drawings of this application, the terms "first", "second", and the like are intended to distinguish between similar objects but do not necessarily indicate a specific order or sequence. It should be understood that data used in such a way is interchangeable in a proper circumstance, so that embodiments described herein can be implemented in an order other than the order illustrated or described herein. In addition, the terms "include" and "have" and any other variants are intended to cover a non-exclusive inclusion. For example, a process, method, system, product, or device that includes a series of steps or units is not necessarily limited to those expressly listed steps or units, but may include other steps or units not expressly listed or inherent to the process, method, product, or device.

A specific term "example" herein means "used as an example, embodiment, or illustration". Any embodiment described as "example" herein is not necessarily explained as being superior or better than other embodiments.

In addition, to better describe this application, numerous specific details are provided in the following specific implementations. A person skilled in the art should understand that, this application may also be implemented without some specific details. In some instances, methods, means, elements, and circuits that are well-known to a person skilled in the art are not described in detail, so that a subject matter of this application is highlighted.

Embodiments of this application provide a federated learning method and a related device, to ensure accuracy and privacy when communication traffic in a federated learning process is reduced. Embodiments of this application further provide a corresponding server, terminal, computer-readable storage medium, computer device, and the like.

The following explains concepts mentioned or used in embodiments of this application.

Federated learning: It is assumed that there is one server and K terminals in a federated learning system, and main training steps of the federated learning system are as follows:

Step 1: Each terminal receives, at a moment t, a global model $W_t$ delivered by the server. The model may be a neural network parameter model, or may be another machine learning model parameter, and is used as a local model $w_t^k$ of each terminal, where k represents a $k^{th}$ terminal.

Step 2: Each terminal updates the local model based on local data to obtain a new local model $w_{t+\tau}^k$, and each terminal uploads the new local model $w_{t+\tau}^k$ or a model update amount $h_{t+\tau}^k = w_{t+\tau}^k - w_t^k$ to the server.

Step 3: The server receives the local model or the model update amount of each terminal, and performs model aggregation to obtain a new global model.

When each terminal uploads the local model, the server updates the global model as follows:

$$w_{t+1} = \frac{1}{K} \sum_{k=1}^{K} w_{t+\tau}^k$$

When each terminal uploads the local model update amount, the server updates the global model update as follows:

$$w_{t+1} = w_t + \sum_{k=1}^{K} \alpha_k h_{t+\tau}^k$$

$\alpha_k$ represents a weight coefficient, and this process is repeated until the global model converges.

Quantization: A quantization technology is referred to as a process of discretizing consecutive signal values into a limited plurality of values. Data may be mapped to a predefined data grid through quantization. During federated learning, each terminal quantizes and encodes model data, and uploads the quantized and encoded model data to the server. A process of quantization and encoding may be represented as follows:

$$u_{t+\tau}^k = \text{Encode}(Q_k(h_{t+\tau}^k))$$

$Q_k$ represents a quantizer, and may be any quantizer. Encode represents an encoding operation, and may be any encoding method, to obtain encoded data $u_{t+\tau}^k$. Compared with uploading an entire model, uploading the encoded data reduces communication traffic.

Differential privacy: A differential privacy technology is to protect potential user privacy information in released data by adding interference noise to the data. During federated learning, each participant adds noise to a model to prevent a malicious attacker from reversely deducing data distribution of the participant from the model. When the model is uploaded, differential noise is added to the model to obtain the following:

$$\widehat{w}_t^k = w_t^k + \mathcal{N}\ (0, \sigma^2)$$

$\mathcal{N}\ (0, \sigma^2)$ represents Gaussian noise whose average value is 0 and variance is $\sigma^2$. In the method, privacy protection is implemented by adding the Gaussian noise to the model.

Multi-party security computing: A multi-party security computing technology is a theoretical framework proposed for a collaborative computing problem between a group of untrusted participants on the premise that privacy information needs to be protected and there is no trusted third party.

Homomorphic encryption: A homomorphic encryption technology is a cryptography technology of computing a complexity theory based on mathematical difficulties. During federated learning, each participant performs homomorphic encryption on the model and uploads a model on which homomorphic encryption has been performed. The cloud server aggregates the model and delivers an aggregated model, and the participant decrypts the aggregated model to obtain an output. The encryption technology can ensure that model aggregation is not affected in a process of encryption and decryption, so that convergence of the global model can be ensured.

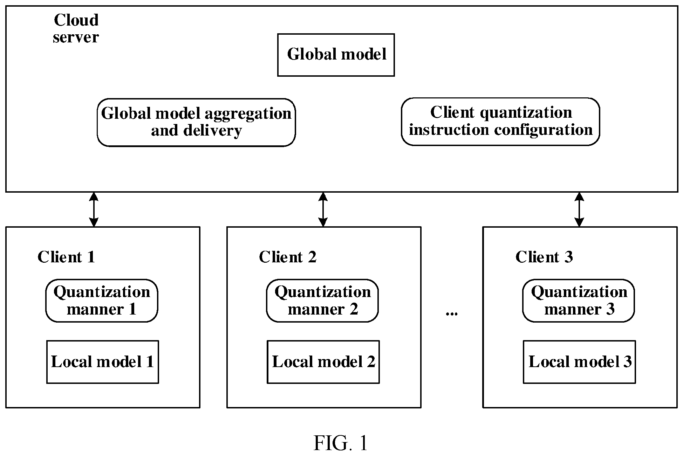

As shown in FIG. 1, in a federated learning architecture provided in an embodiment of this application, each terminal may be considered as a client. For example, there are a client 1, a client 2, and a client 3. In addition, more clients may be disposed. A server may be a cloud server that stores a global model, and may perform aggregation and delivery of the global model, and configure a quantization instruction of each client. Each client selects a corresponding quantization manner based on the corresponding quantization instruction, to quantize a trained local model.

The following describes a federated learning method provided in embodiments of this application with reference to the foregoing concept descriptions and the learning framework.

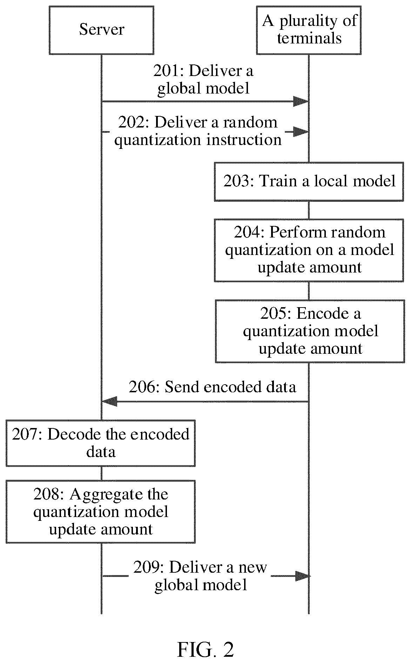

As shown in FIG. 2, an embodiment of the federated learning method provided in embodiments of this application includes the following steps.

201: A server delivers a global model to a plurality of terminals.

202: The server delivers a random quantization instruction to the plurality of terminals.

203: The terminal trains a local model to obtain a model update amount.

The global model delivered by the server includes a plurality of local models, and the plurality of local models are in one-to-one correspondence with the plurality of terminals. In other words, each terminal has one local model corresponding to the terminal. For example, the global model includes a local model 1 and a local model 2. The server delivers the local model 1 to a terminal 1, and delivers the local model 2 to a terminal 2. The server may be specifically a cloud server, and the terminal may be represented as a client.

At a moment t, the terminal receives the global model and the random quantization instruction that are delivered by the server, in other words, receives a corresponding local model and a quantization instruction for the local model that are delivered by the server. Specifically, each terminal trains the local model of the terminal for $\tau$ times based on local data, to update the local model. $\tau$ is a positive integer greater than or equal to 1, and the model update amount may be represented as follows:

$$h_{t+\tau}^k = w_{t+\tau}^k - w_t^k$$

$w_t^k$ represents a local model of a $k^{th}$ terminal at the moment t, and $w_{t+\tau}^k$ is a local model obtained after the $\tau$ times of training.

It should be noted that an execution sequence of step 102 and step 103 may be changed. To be specific, the terminal may receive the random quantization instruction after completing training to obtain the model update amount. This is not limited in this embodiment of this application.

204: The terminal performs random quantization on the model update amount based on the random quantization instruction, to obtain a quantization model update amount.

205: The terminal encodes the quantization model update amount to obtain encoded data.

206: The server receives encoded data sent by the plurality of terminals.

207: The server decodes the encoded data to obtain quantization model update amounts of the plurality of terminals.

The quantization model update amounts of the plurality of terminals are obtained by quantizing model update amounts of the plurality of terminals by the plurality of terminals based on the random quantization instruction, and the model update amounts of the plurality of terminals are obtained by training the plurality of local models by the plurality of terminals.

208: The server aggregates the quantization model update amounts of the plurality of terminals to obtain a new global model.

209: The server delivers the new global model to the plurality of terminals to perform iterative update, until the global model converges.

After obtaining the model update amount, each terminal performs random quantization on the model update amount based on the random quantization instruction received by the terminal. There may be a plurality of types of random quantization instructions, which are separately described in the following.

1. The random quantization instruction is a random step quantization instruction.

A terminal k quantizes a model update amount based on an average value $\bar{s}$ of quantization steps delivered by a quantization controller of the server and a random step $s_t^k$ obtained through sampling in random distribution of the average value of $\bar{s}$, to obtain that a quantization model update amount is as follows:

$$\tilde{h}_{t+\tau}^k = Q(h_{t+\tau}^k) + s_t^k \times d$$

Q represents a general proximity quantizer, and $s_t^k \times d$ represents an additional error introduced in this random quantization manner, and implements privacy protection.

Then, each terminal encodes the quantization model update amount to obtain encoded data:

$$u_{t+\tau}^k = Encode(\tilde{h}_{t+\tau}^k)$$

The server receives the encoded data sent by each terminal, and decodes the encoded data to obtain the quantization model update amounts of the plurality of terminals, namely, the local model of each terminal.

$$\hat{h}_{t+\tau}^k = Decode(u_{t+\tau}^k)$$

Finally, the server aggregates decoded gradients, namely, the quantization model update amounts of the plurality of terminals, to obtain a new global model:

$$w_{t+1} = w_t + \sum_{k=1}^{K} \alpha_k \hat{h}_{t+\tau}^k$$

$\alpha_k$ represents a learning rate. A random quantization step used by each terminal is randomly and evenly distributed. When there are enough terminals participating in federated learning, an additional error introduced by a random quantization step method satisfies $\sum_{k \in \mathcal{K}} s_t^k \times d$, where $\mathcal{K}$ represents a terminal set. Therefore, after model aggregation, the additional quantization error introduced by the random quantization method may be effectively eliminated, and convergence of the global model is not affected. After model aggregation, the server delivers a latest global model to each terminal, configures a new quantization instruction for each terminal, and delivers the quantization instruction to the client. The quantization instruction includes an instruction for selecting a random step quantization manner and an average value $\bar{s}$ of quantization steps in a new round of iteration. Then, each terminal performs a new round of quantization based on the quantization instruction, until the global model converges.

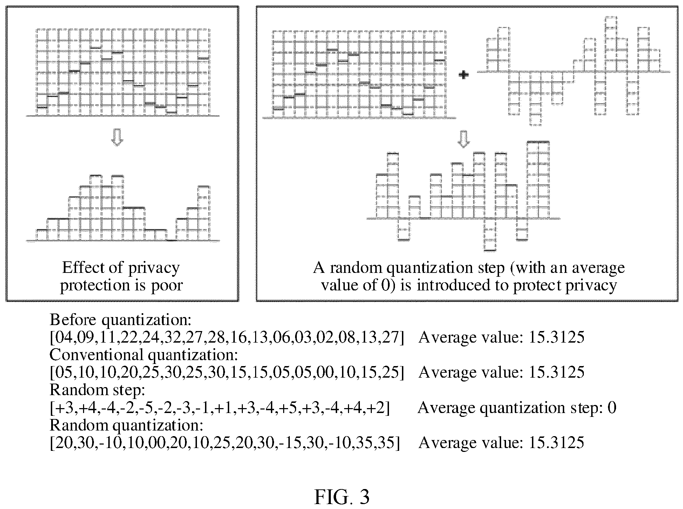

Specifically, as shown in FIG. 3, in a conventional proximity quantization method in which an upper left part of FIG. 3 represents raw data that needs to be uploaded by 16 terminals, and a lower left part of FIG. 3 represents data that is uploaded by the 16 terminals after being quantized, where the two parts have similar distribution and a small difference, effect of privacy protection is poor. A right part of FIG. 3 shows a method for introducing the random quantization step. After the random quantization step is introduced, data privacy may be effectively protected. For the 16 terminals, average value data obtained after aggregation is performed by using a conventional quantization technology in the left part of the figure is the same as average value data obtained after aggregation is performed by using a distributed random quantization technology in the right part of the figure. However, effect of privacy protection of the distributed random quantization technology in the right part of the figure is better.

2. The random quantization instruction is a random quantizer instruction.

The server first generates a random quantizer set $Q := \{Q_1, ..., Q_J\}$. A random quantizer includes an upward quantizer and a downward quantizer, and a quantity of used upward quantizers is the same as a quantity of used downward quantizers.

The upward quantizer maps continuous data to a grid point above the data, and this is represented as $Q(x) = d \times \text{ceil}(x/d)$, where ceil represents rounding up. The downward quantizer maps continuous data to a grid point below the data, and this is represented as $Q(x) = d \times \text{floor}(x/d)$, where floor represents rounding down.

A terminal k quantizes, based on the random quantizer instruction, a model update amount by using a quantizer selected from the quantizer set, to obtain that a quantization model update amount is as follows:

$$\tilde{h}^k_{t+\tau} = Q_k(h^k_{t+\tau})$$

$Q_k$ represents the quantizer randomly selected by the terminal k. The random quantizer introduces random disturbance, and this may replace a differential privacy method.

Then, each terminal encodes the quantization model update amount to obtain encoded data:

$$u^k_{t+\tau} = \text{Encode}(\tilde{h}^k_{t+\tau})$$

The server receives the encoded data sent by each terminal, and decodes the encoded data to obtain the quantization model update amounts of the plurality of terminals, namely, the local model of each terminal.

$$\hat{h}^k_{t+\tau} = \text{Decode}(u^k_{t+\tau})$$

Finally, the server aggregates decoded gradients, namely, the quantization model update amounts of the plurality of terminals, to obtain a new global model.

$$w_{t+1} = w_t + \sum_{k=1}^{K} \alpha_k \hat{h}^k_{t+\tau}$$

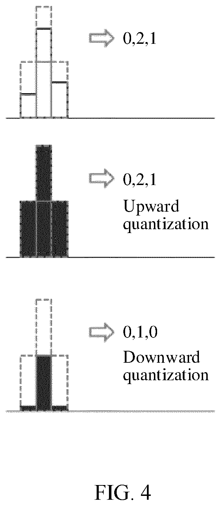

$\alpha_k$ represents a learning rate. As shown in FIG. 4, for a quantization method selected by the random quantizer, an upward quantization method and a downward quantization method respectively introduce additional errors $e_u$ and $e_d$ to perform privacy protection. When a quantity of terminals is large enough, and a quantity $|\mathcal{K}_1|$ of terminals using the upward quantizer is equal to a quantity $|\mathcal{K}_2|$ of terminals using the downward quantizer, where it is assumed that model data is randomly and evenly distributed, the error items satisfy $\sum_{k \in \mathcal{K}_1} e_u + \sum_{k \in \mathcal{K}_2} e_d \approx 0$. Therefore, global model aggregation may reduce random disturbance caused by the quantizer, so that a precision loss is reduced.

After model aggregation, the server delivers a latest global model to each terminal, configures a new quantization instruction for each terminal, and delivers the quantization instruction to the terminal. The quantization instruction is a quantizer index value, and indicates each terminal to select a random quantizer from the random quantizer set based on the index to quantize the local model. For example, if cardinality of the quantizer set is J, and a quantization manner configured by the server for a terminal is to use a $j^{th}$ quantizer, the server uses a binary representation of an index j as a quantization instruction and delivers the quantization instruction to the terminal.

3. The random quantization instruction is a random step quantization instruction and a random quantizer instruction.

A terminal k introduces a random quantization step, performs random disturbance on a model gradient to obtain a disturbed model gradient, and then quantizes the disturbed model gradient by using a random quantizer to obtain that a quantization model update amount is as follows:

$$\tilde{h}^k_{t+\tau} = Q_k(h^k_{t+\tau} + s^k_t \times d)$$

$Q_k$ represents a quantizer randomly selected by the terminal k, $s^k_t \times d$ represents an additional error introduced in this random quantization manner. Privacy protection is better implemented in combination with the privacy protection methods in the foregoing two manners.

Then, each terminal encodes the quantization model update amount to obtain encoded data:

$$u^k_{t+\tau} = \text{Encode}(\tilde{h}^k_{t+\tau})$$

The server receives the encoded data sent by each terminal, and decodes the encoded data to obtain the quantization model update amounts of the plurality of terminals, namely, the local model of each terminal.

$$\hat{h}^k_{t+\tau} = \text{Decode}(u^k_{t+\tau})$$

Finally, the server aggregates decoded gradients, namely, the quantization model update amounts of the plurality of terminals, to obtain a new global model.

$$w_{t+1} = w_t + \sum_{k=1}^{K} \alpha_k \hat{h}^k_{t+\tau}$$

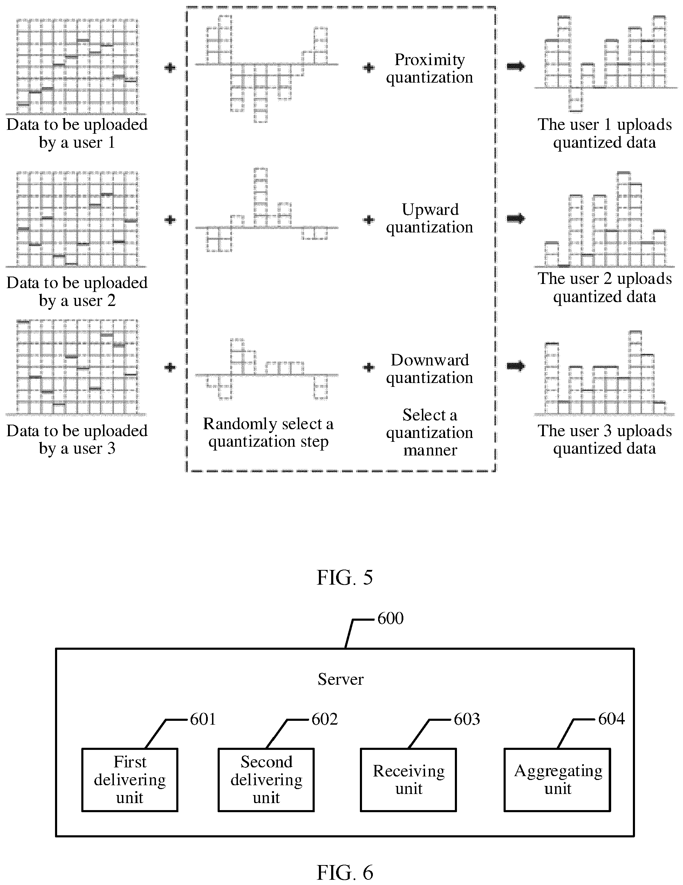

As shown in FIG. 5, a user corresponds to a terminal. Similar to the foregoing two manners, model aggregation may reduce the quantization errors introduced by the random quantization step and quantization by the random quantizer, and does not affect convergence of the global model.

It should be noted that there are a plurality of types of random quantization instructions used in iterative update. To be specific, when each round of iterative update is performed, the random quantization instruction delivered by the server to the terminal may vary. For example, for the terminal 1, a random quantization instruction delivered by the server in a first round is a random step quantization instruction, a random quantization instruction delivered in a second round after model aggregation is a random step quantization instruction and a random quantizer instruction, a random quantization instruction delivered in a third round after model aggregation is a random quantizer instruction, and the random quantization instruction delivered in the third round after model aggregation is a random quantizer instruction, until the global model converges.

In addition, the foregoing three encoding manners for the quantization model update amount may be dictionary matrix encoding. To be specific, the quantization model update amount $\tilde{h}_{t+\tau}^{k}$ is multiplied by one dictionary matrix and then uploaded, so that disturbance can be introduced. The server and the terminal have a same matrix dictionary. The server delivers uses a matrix dictionary index as an instruction and delivers the instruction to the terminal, and the terminal selects a dictionary matrix based on the index to introduce the disturbance. For example, the matrix dictionary stores different random quantization steps d, the server may use the dictionary index as a quantization instruction and send the quantization instruction to the terminal, and the terminal configures a quantization step d in this round based on the index and the matrix dictionary.

After aggregating the global model, the server may set a determination of whether a stop condition is met. If the stop condition is met, a currently aggregated global model is output. If the stop condition is not met, the global model continues to be delivered to perform iterative update. The stop condition may be that a quantity of rounds of iterative update reaches a preset value set by the user, in other words, iterative update stops when a preset quantity of times is reached. Alternatively, the stop condition may be whether the global model converges, in other words, whether a difference between an output value of a current global model and a target value of the current global model is less than a preset value. If the difference is less than the preset value, iterative update stops.

In embodiments of this application, during federated learning, a server delivers a random quantization instruction to a plurality of terminals, and the plurality of terminals perform random quantization on training update data based on the random quantization instruction and upload, to the server, training update data on which random quantization has been performed. Quantization may reduce communication traffic, and random quantization may introduce disturbance to protect user privacy. After aggregating the training update data on which random quantization has been performed, the server may eliminate an additional quantization error introduced by random quantization, so that accuracy and privacy are ensured when the communication traffic in a federated learning process is reduced.

As shown in FIG. 6, an embodiment of a server 600 provided in embodiments of this application includes the following units.

A first delivering unit 601 is configured to deliver a global model to a plurality of terminals. The global model includes a plurality of local models, and the plurality of local models are in one-to-one correspondence with the plurality of terminals. The first delivering unit 601 may perform step 201 in the foregoing method embodiment.

A second delivering unit 602 is configured to deliver a random quantization instruction to the plurality of terminals. The second delivering unit 602 may perform step 202 in the foregoing method embodiment.

A receiving unit 603 is configured to: receive encoded data sent by the plurality of terminals, and decode the encoded data to obtain quantization model update amounts of the plurality of terminals. The quantization model update amounts of the plurality of terminals are obtained by quantizing model update amounts of the plurality of terminals by the plurality of terminals based on the random quantization instruction, and the model update amounts of the plurality of terminals are obtained by training the plurality of local models by the plurality of terminals. The receiving unit 603 may perform step 206 and step 207 in the foregoing method embodiment.

An aggregating unit 604 is configured to: aggregate the quantization model update amounts of the plurality of terminals to obtain a new global model, and deliver the new global model to the plurality of terminals to perform iterative update, until the global model converges. The aggregating unit 604 may perform step 208 in the foregoing method embodiment.

In this embodiment of this application, during federated learning, the server 600 delivers the random quantization instruction to the plurality of terminals, and the plurality of terminals perform random quantization on training update data based on the random quantization instruction and upload, to the server 600, training update data on which random quantization has been performed. Quantization may reduce communication traffic, and random quantization may introduce disturbance to protect user privacy. After aggregating the training update data on which random quantization has been performed, the server 600 may eliminate an additional quantization error introduced by random quantization, so that accuracy and privacy are ensured when the communication traffic in a federated learning process is reduced.

Optionally, the random quantization instruction includes a random step quantization instruction and/or a random quantizer instruction. The quantization model update amounts of the plurality of terminals are obtained by applying a random step quantization method and/or a random quantizer to the model update amounts of the plurality of terminals by the plurality of terminals based on the random step quantization instruction and/or the random quantizer instruction.

Optionally, random quantization steps used in the random step quantization method are randomly and evenly distributed.

Optionally, the random quantizer includes an upward quantizer and a downward quantizer, and a quantity of upward quantizers is the same as a quantity of downward quantizers.

Optionally, there are a plurality of types of random quantization instructions used in iterative update.

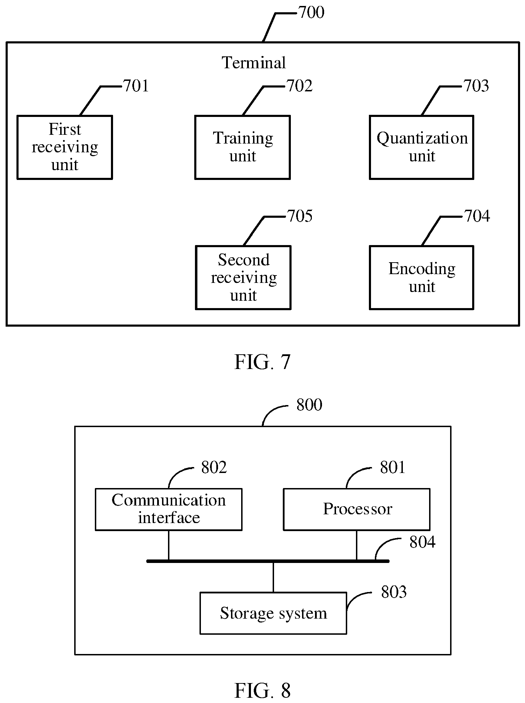

As shown in FIG. 7, an embodiment of a terminal 700 provided in embodiments of this application includes the following units.

A first receiving unit 701 is configured to receive a local model and a random quantization instruction that are delivered by a server. The first receiving unit 701 may perform step 201 and step 202 in the foregoing method embodiment.

A training unit 702 is configured to train the local model to obtain a model update amount. The training unit 702 may perform step 203 in the foregoing method embodiment.

A quantization unit 703 is configured to perform random quantization on the model update amount based on the random quantization instruction, to obtain a quantization model update amount. The quantization unit 703 may perform step 204 in the foregoing method embodiment.

An encoding unit 704 is configured to: encode the quantization model update amount to obtain encoded data, and send the encoded data to the server. The encoding unit 704 may perform step 205 in the foregoing method embodiment.

A second receiving unit 705 is configured to receive a new local model and a new random quantization instruction that are delivered by the server to perform iterative update, until a global model converges. The new local model is obtained by aggregating quantization model update amounts of a plurality of terminals by the server, and the quantization model update amounts of the plurality of terminals are obtained by decoding, by the server, encoded data sent by the plurality of terminals. The second receiving unit 705 may perform step 209 in the foregoing method embodiment.

In this embodiment of this application, during federated learning, the server delivers the random quantization instruction to the plurality of terminals 700, and the plurality of terminals 700 perform random quantization on training update data based on the random quantization instruction and upload, to the server, training update data on which random quantization has been performed. Quantization may reduce communication traffic, and random quantization may introduce disturbance to protect user privacy. After aggregating the training update data on which random quantization has been performed, the server may eliminate an additional quantization error introduced by random quantization, so that accuracy and privacy are ensured when the communication traffic in a federated learning process is reduced.

Optionally, the random quantization instruction includes a random step quantization instruction and/or a random quantizer instruction. The quantization unit 703 is specifically configured to perform random quantization on the model update amount based on the random step quantization instruction and/or the random quantizer instruction by using a random step quantization method and/or a random quantizer.

Optionally, random quantization steps used in the random step quantization method are randomly and evenly distributed.

Optionally, the random quantizer includes an upward quantizer and a downward quantizer, and a quantity of upward quantizers is the same as a quantity of downward quantizers.

Optionally, there are a plurality of types of random quantization instructions used in iterative update.

As shown in a computer device in FIG. 8, FIG. 8 is a schematic diagram of a possible logical structure of a computer device 800 according to an embodiment of this application. The computer device 800 includes a processor 801, a communication interface 802, a storage system 803, and a bus 804. The processor 801, the communication interface 802, and the storage system 803 are connected to each other through the bus 804. In this embodiment of this application, the processor 801 is configured to control and manage an action of the computer device 800. For example, the processor 801 is configured to perform the federated learning method performed by the server or the terminal described in the foregoing embodiments. The communication interface 802 is configured to support the computer device 800 in communication. The storage system 803 is configured to store program code and data of the computer device 800.

The computer device 800 may be specifically the server or the terminal in the foregoing embodiments. The processor 801 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor 801 may be a combination of processors that implement a computing function, for example, a combination that includes one or more microprocessors, or a combination of a digital signal processor and a microprocessor. The bus 804 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used for representing the bus in FIG. 8, but this does not mean that there is only one bus or only one type of bus.

In another embodiment of this application, a computer-readable storage medium is further provided. The computer-readable storage medium stores computer-executable instructions. When at least one processor of a device executes the computer-executable instructions, the device performs the federated learning method described in the foregoing embodiments.

In another embodiment of this application, a computer program product is further provided. The computer program product includes computer-executable instructions. The computer-executable instructions are stored in a computer-readable storage medium. At least one processor of a device may read the computer-executable instructions from the computer-readable storage medium. The at least one processor executes the computer-executable instructions to enable the device to perform the federated learning method described in the foregoing embodiments.

In another embodiment of this application, a chip system is further provided. The chip system includes at least one processor and an interface. The interface is configured to receive data and/or a signal. The at least one processor is configured to support implementation of the federated learning method described in the foregoing embodiments. In a possible design, the chip system may further include a memory. The memory is configured to store program instructions and data that are necessary for a computer device. The chip system may include a chip, or may include a chip and another discrete component.

It may be clearly understood by a person skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that, the disclosed system, apparatus, and method may be implemented in another manner. For example, the described apparatus embodiment is merely an example. For example, division into the units is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between the apparatuses or units may be implemented in electrical, mechanical, or another form.

The units described as separate components may or may not be physically separate, and components displayed as units may or may not be physical units, that is, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device, or the like) to perform all or some of the steps of the method in embodiments of this application. The foregoing storage medium includes: any medium, such as a USB flash drive, a removable hard disk, a read-only memory (ROM, read-only memory), a random access memory (RAM, random access memory), a magnetic disk, or an optical disc, that can store program code.

**Claims**

1. A federated learning method, comprising:

   delivering, by a server, a global model to a plurality of terminals, wherein the global model comprises a plurality of local models, and the plurality of local models are in one-to-one correspondence with the plurality of terminals;
   delivering, by the server, a random quantization instruction to the plurality of terminals;
   receiving, by the server, encoded data sent by the plurality of terminals, and decoding the encoded data to obtain quantization model update amounts of the plurality of terminals, wherein the quantization model update amounts of the plurality of terminals are obtained by quantizing model update amounts of the plurality of terminals by the plurality of terminals based on the random quantization instruction, and the model update amounts of the plurality of terminals are obtained by training the plurality of local models by the plurality of terminals; and

aggregating, by the server, the quantization model update amounts of the plurality of terminals to obtain a new global model, and delivering the new global model to the plurality of terminals to perform iterative update, until the global model converges.

2. The method according to claim 1, wherein the random quantization instruction comprises a random step quantization instruction and/or a random quantizer instruction, and the quantization model update amounts of the plurality of terminals are obtained by performing random quantization on the model update amounts of the plurality of terminals by the plurality of terminals based on the random step quantization instruction and/or the random quantizer instruction by using a random step quantization method and/or a random quantizer.

3. The method according to claim 2, wherein random quantization steps used in the random step quantization method are randomly and evenly distributed.

4. The method according to claim 2, wherein the random quantizer comprises an upward quantizer and a downward quantizer, and a quantity of upward quantizers is the same as a quantity of downward quantizers.

5. The method according to any one of claims 1 to 4, wherein there are a plurality of types of random quantization instructions used in iterative update.

6. A federated learning method, comprising:

receiving, by a terminal, a local model and a random quantization instruction that are delivered by a server;
training, by the terminal, the local model to obtain a model update amount;
performing, by the terminal, random quantization on the model update amount based on the random quantization instruction, to obtain a quantization model update amount;
encoding, by the terminal, the quantization model update amount to obtain encoded data, and sending the encoded data to the server; and
receiving, by the terminal, a new local model and a new random quantization instruction that are delivered by the server to perform iterative update, until a global model converges, wherein the new local model is obtained by aggregating quantization model update amounts of a plurality of terminals by the server, and the quantization model update amounts of the plurality of terminals are obtained by decoding, by the server, encoded data sent by the plurality of terminals.

7. The method according to claim 6, wherein the random quantization instruction comprises a random step quantization instruction and/or a random quantizer instruction, and performing, by the terminal, random quantization on the model update amount based on the random quantization instruction comprises:

performing, by the terminal, random quantization on the model update amount based on the random step quantization instruction and/or the random quantizer instruction by using a random step quantization method and/or a random quantizer.

8. The method according to claim 7, wherein random quantization steps used in the random step quantization method are randomly and evenly distributed.

9. The method according to claim 7, wherein the random quantizer comprises an upward quantizer and a downward quantizer, and a quantity of upward quantizers is the same as a quantity of downward quantizers.

10. The method according to any one of claims 6 to 9, wherein there are a plurality of types of random quantization instructions used in iterative update.

11. A server, comprising:

a first delivering unit, configured to deliver a global model to a plurality of terminals, wherein the global model comprises a plurality of local models, and the plurality of local models are in one-to-one correspondence with the plurality of terminals;
a second delivering unit, configured to deliver a random quantization instruction to the plurality of terminals;
a receiving unit, configured to: receive encoded data sent by the plurality of terminals, and decode the encoded data to obtain quantization model update amounts of the plurality of terminals, wherein the quantization model update amounts of the plurality of terminals are obtained by quantizing model update amounts of the plurality of terminals by the plurality of terminals based on the random quantization instruction, and the model update amounts of the plurality of terminals are obtained by training the plurality of local models by the plurality of terminals; and
an aggregating unit, configured to: aggregate the quantization model update amounts of the plurality of terminals to obtain a new global model, and deliver the new global model to the plurality of terminals to perform iterative update, until the global model converges.

12. The server according to claim 11, wherein the random quantization instruction comprises a random step quantization instruction and/or a random quantizer instruction, and the quantization model update amounts of the plurality of terminals are obtained by performing random quantization on the model update amounts of the plurality of terminals by the plurality of terminals based on the random step quantization instruction and/or the random quantizer instruction by using a random step quantization method and/or a random quantizer.

13. The server according to claim 12, wherein random quantization steps used in the random step quantization method are randomly and evenly distributed.

14. The server according to claim 12, wherein the random quantizer comprises an upward quantizer and a downward quantizer, and a quantity of upward quantizers is the same as a quantity of downward quantizers.

15. The server according to any one of claims 11 to 14, wherein there are a plurality of types of random quantization instructions used in iterative update.

16. A terminal, comprising:

    a first receiving unit, configured to receive a local model and a random quantization instruction that are delivered by a server;
    a training unit, configured to train the local model to obtain a model update amount;
    a quantization unit, configured to perform random quantization on the model update amount based on the random quantization instruction, to obtain a quantization model update amount;
    an encoding unit, configured to: encode the quantization model update amount to obtain encoded data, and send the encoded data to the server; and
    a second receiving unit, configured to receive a new local model and a new random quantization instruction that are delivered by the server to perform iterative update, until a global model converges, wherein the new local model is obtained by aggregating quantization model update amounts of a plurality of terminals by the server, and the quantization model update amounts of the plurality of terminals are obtained by decoding, by the server, encoded data sent by the plurality of terminals.

17. The terminal according to claim 16, wherein the random quantization instruction comprises a random step quantization instruction and/or a random quantizer instruction, and that the terminal performs random quantization on the model update amount based on the random quantization instruction comprises:

    performing, by the terminal, random quantization on the model update amount based on the random step quantization instruction and/or the random quantizer instruction by using a random step quantization method and/or a random quantizer.

18. The terminal according to claim 17, wherein random quantization steps used in the random step quantization method are randomly and evenly distributed.

19. The terminal according to claim 17, wherein the random quantizer comprises an upward quantizer and a downward quantizer, and a quantity of upward quantizers is the same as a quantity of downward quantizers.

20. The terminal according to any one of claims 16 to 19, wherein there are a plurality of types of random quantization instructions used in iterative update.

21. A computer device, comprising a processor, a communication interface, and a memory, wherein the memory is configured to store program code, and the processor is configured to invoke the program code in the memory, to enable the processor to perform the method according to any one of claims 1 to 5 or claims 6 to 10.

22. A computer-readable storage medium, storing instructions, wherein when the instructions are run on a computer, the computer is enabled to perform the method according to any one of claims 1 to 5 or claims 6 to 10.

**Cloud
server**

Global model

Global model aggregation
and delivery

Client quantization
instruction configuration

**Client 1**

Quantization
manner 1

Local model 1

**Client 2**

Quantization
manner 2

Local model 2

...

**Client 3**

Quantization
manner 3

Local model 3

FIG. 1

FIG. 2

| Effect of privacy protection is poor | A random quantization step (with an average value of 0) is introduced to protect privacy |

Before quantization:
[04,09,11,22,24,32,27,28,16,13,06,03,02,08,13,27]   Average value: 15.3125
Conventional quantization:
[05,10,10,20,25,30,25,30,15,15,05,05,00,10,15,25]   Average value: 15.3125
Random step:
[+3,+4,-4,-2,-5,-2,-3,-1,+1,+3,-4,+5,+3,-4,+4,+2]   Average quantization step: 0
Random quantization:
[20,30,-10,10,00,20,10,25,20,30,-15,30,-10,35,35]   Average value: 15.3125

FIG. 3

0,2,1

0,2,1
Upward
quantization

0,1,0
Downward
quantization

FIG. 4

Data to be uploaded by a user 1

Data to be uploaded by a user 2

Data to be uploaded by a user 3

Proximity quantization

Upward quantization

Downward quantization

Randomly select a quantization step

Select a quantization manner

The user 1 uploads quantized data

The user 2 uploads quantized data

The user 3 uploads quantized data

FIG. 5

600

Server

601 First delivering unit

602 Second delivering unit

603 Receiving unit

604 Aggregating unit

FIG. 6

—700

Terminal

—701

First
receiving
unit

—702

Training
unit

—703

Quantization
unit

—705

Second
receiving
unit

—704

Encoding
unit

FIG. 7

800

—802

Communication
interface

—801

Processor

—804

—803

Storage system

FIG. 8

## INTERNATIONAL SEARCH REPORT

| International application No. |
|---|
| **PCT/CN2022/133861** |

### A. CLASSIFICATION OF SUBJECT MATTER

G06N 20/20(2019.01)i

According to International Patent Classification (IPC) or to both national classification and IPC

### B. FIELDS SEARCHED

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI, CNABS: 联邦学习, 全局, 本地, 模型, 终端, 服务器, 随机, 量化, 编码, 解码, 更新, 梯度, 训练, 迭代, 聚合, federal learning, global, local, model, terminal, server, random, quantization, code, decode, update, gradient, train, iteration, polymerization

### C. DOCUMENTS CONSIDERED TO BE RELEVANT

| Category* | Citation of document, with indication, where appropriate, of the relevant passages | Relevant to claim No. |
|---|---|---|
| X | CN 113098806 A (SOUTH CHINA UNIVERSITY OF TECHNOLOGY) 09 July 2021 (2021-07-09) description, paragraphs 2-120 | 1-22 |
| X | CN 112906046 A (TSINGHUA UNIVERSITY; NAVY AVIATION UNIVERSITY OF THE PLA) 04 June 2021 (2021-06-04) description, paragraphs 2-177 | 1-22 |
| A | CN 113315604 A (UNIVERSITY OF ELECTRONIC SCIENCE AND TECHNOLOGY OF CHINA) 27 August 2021 (2021-08-27) entire document | 1-22 |
| A | CN 113258935 A (SHANDONG UNIVERSITY) 13 August 2021 (2021-08-13) entire document | 1-22 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 January 2023** | **28 January 2023** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/133861**

| Patent document cited in search report | | | Publication date (day/month/year) | Patent family member(s) | | | Publication date (day/month/year) |
|---|---|---|---|---|---|---|---|
| CN | 113098806 | A | 09 July 2021 | CN | 113098806 | B | 29 March 2022 |
| CN | 112906046 | A | 04 June 2021 | None | | | |
| CN | 113315604 | A | 27 August 2021 | CN | 113315604 | B | 03 June 2022 |
| CN | 113258935 | A | 13 August 2021 | CN | 113258935 | B | 04 March 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111463299